# EUROPEAN PATENT APPLICATION

(11) **EP 2 752 322 A1**
(43) Date of publication of application: **09.07.2014**
(21) Application number: 12827036.0
(22) Date of filing: 03.04.2012
(51) Int. Cl.: B60H 1/34, F24F 13/12

(54) **AIR EJECTION DEVICE**

(30) Priority: 31.08.2011 JP 2011188861
(71) Applicant: Howa Plastics Co., Ltd., Aichi 470-0496 (JP); Toyota Jidosha Kabushiki Kaisha, Toyota-shi, Aichi 471-8571 (JP)
(72) Inventor: KANEDA Kentarou, Toyota-shi Aichi 470-0496 (JP); KOSUGI Kenji, Toyota-shi Aichi 470-0496 (JP); NIWA Takashi, Toyota-shi Aichi 471-8571 (JP)
(74) Representative: Ettmayr, Andreas
(86) International application number: PCT/JP2012/059114
(87) International publication number: WO 2013/031277

(57) **Abstract**

An air blower device has a tubular body 10 defining an air guide passage and a ring-shaped member 20 supported by the tubular body 10. The ring-shaped member 20 has an extended part 23b, 23c extending from the ring-shaped member toward the opening portion 12 at the back end of the tubular body. The extended part has an edge facing the opening portion 12 at the back end of the tubular body, and the edge is located between an edge 22 belonging to the ring-shaped member 20 to face the opening portion at the back end of the tubular body and the opening portion 12 at the back end of the tubular body. The ring-shaped member 20 is supported by the tubular body 10 by a contact between a first protrusion 13 formed on an inner periphery of the tubular body 10 so as to protrude from the inner periphery into the air guide passage defined by the tubular body and a second protrusion 24b, 24c formed on the extended part 23b, 23c of the ring-shaped member 10 so as to protrude from the extended part toward the inner periphery of the tubular body.

## Description

### TECHNICAL FIELD

This invention relates to an air blower device applied to vehicles, etc.

### BACKGROUND ART

Air blower devices, which is aiming at improving interior condition of vehicles, etc., are conventionally designed to control a flow volume and a flow direction of cooling/heating air supplied into the vehicle interior. One of conventional air blower device (hereinafter referred to as "conventional device") is composed of a cylindrical body to define a guide passage (flow passage) of the cooling/heating air, a ring-shaped member inserted in the cylindrical body, flow direction regulating plates installed on the inner side of the ring-shaped member, and a holding member to keep the flow direction regulating plates and the ring-shaped member at the inside of the cylindrical body. The conventional device is configured to control the flow volume and the flow direction of air discharged from the device by manipulating a rotational state of the flow direction regulating plates (a rotational angle around an axis line of the cylindrical body and an axis perpendicular to the axis line). For example, see the patent literature 1.

### CITATION LIST

Patent Literature 1: JP 2004-237854 A

### SUMMARY OF INVENTION

### 1. Technical Problem

The conventional device is composed of the multiple members (the cylindrical body, the ring-shaped member, the flow direction regulating plates and the holding member) described above. In general, each composing member of the air blower device is manufactured separately, and hence the number of steps for preparing those composing members increases with increasing number of those members, and management of inventory and quality of the members may become complicated. Furthermore, in general, the air blower device is produced by assembling those prepared composing members in order, and hence the number of steps for producing the air blower device increases with increasing number of those members, and those steps may become complicated. As a result thereof, cost and time for producing the air blower device may increase. It is preferable to reduce the cost and time for producing the air blower device as far as functions as an air blower device are appropriately maintained.

In view of the above technical problems, it is an object of the present invention to provide an air blower device that can be produced by simpler producing method while keeping functions as an air blower device sufficiently.

### 2. Solution to Problem

The air blower device of the present invention for solving the above technical problem comprises: a tubular body defining an air guide passage; and a ring-shaped member supported by the tubular body without the need for any member such as the holding member of the conventional device described above.

In more particular, the air blower device of the present invention comprises:
a "tubular body" defining an air guide passage, the tubular body allowing air flowed into the tubular body from an opening portion at a back end of the tubular body to pass through the air guide passage and to discharge from an opening portion at a front end of the tubular body; and
a "ring-shaped member" supported by the tubular body, at least one part of the ring-shaped member being at the inside of the tubular body.

The above "tubular body" may have a shape of a tube that can form an air guide passage therein, and is not specifically limited in shape, etc. Examples employed as the tubular body may include a cylindrical body that has a circular cross-sectional shape when the tubular body is cut by a plane perpendicular to the axis line of the tubular body. Furthermore, a tubular body that is prepared by combining multiple members each having a shape of a tube (for example, multiple cylindrical members each having different inner diameters) may be employed as the tubular body. Additionally, both a tubular body having a straight axis line (in brief, an unbent tubular body) and a tubular body having a curved axis line (in brief, an bent tubular body) may be employed as the tubular body.

The phrase "at least one part of the ring-shaped member being at the inside of the tubular body" in regard to the "ring-shaped member" includes both of the way that the whole (total) extent of the ring-shaped member exists at the inside of the tubular body and the way that one part of the ring-shaped member exists at the inside of the tubular body and the other part of the ring-shaped member exists at the outside of the tubular body. In addition, the phrase "at the inside of the tubular body" represents an area defined with the inner periphery of the tubular body, the opening portion at the front end of the tubular body, and the opening portion at the back end of the tubular body.

In this air blower device,
the ring-shaped member has an "extended part extending from the ring-shaped member toward the opening portion at the back end of the tubular body". Furthermore, the extended part has an edge facing the opening portion at the back end of the tubular body, and the edge is located between an edge belonging to the ring-shaped member to face the opening portion at the back end of the tubular body and the opening portion at the back end of the tubular body.

The above "extended part" may be a part that has a fixed end as one end connected to the ring-shaped member and a free end as the other end (which corresponds to the above "edge facing the opening portion at the back end of the tubular body"), but not specifically limited in shape, etc. Examples employed as the extended part may include a part extended from an edge of the ring-shaped member (in particular, an edge facing the opening portion at the back end of the tubular body) along a direction parallel to the direction of axis of the ring-shaped member and a part extend from the edge of the ring-shaped member along an inclined direction at a predetermined angle with respect to the direction of axis of the ring-shaped member, etc.

The above "extended part" has an inner surface in a radial direction of the ring-shaped member (hereinafter referred to as "inner periphery of the extended part") and an outer surface in the radial direction (hereinafter referred to as "outer periphery of the extended part"). Regarding the relationship between the inner periphery of the extended part and the inner periphery of the ring-shaped member, the inner periphery of the extended part may be connected to the inner periphery of the ring-shaped member without any step (so-called even surface), or may be connected to the inner periphery of the ring-shaped member via predetermined step. Furthermore, a radius of curvature of the inner periphery of the extended part may be the same as or different from a radius of curvature of the inner periphery of the ring-shaped member. The same relation may apply to the relationship between the outer periphery of the extended part and the outer periphery of the ring-shaped member.

The ring-shaped member having the above configuration is supported at the inside of the tubular body. In particular, the tubular body has a "first protrusion" formed on an inner periphery of the tubular body so as to protrude from the inner periphery into the air guide passage defined by the tubular body. On the other hand, the ring-shaped member has a "second protrusion" formed on the extended part of the ring-shaped member so as to protrude from the extended part toward the inner periphery of the tubular body. The ring-shaped member is supported by the tubular body by a contact (for example, an engagement) between the first protrusion and the second protrusion.

The above "first protrusion" and the above "second protrusion" may be parts to allow the ring-shaped member to be supported by the tubular body by the contact of the both, but not specifically limited in shape, number, and position of them. In addition, specific embodiments of the first protrusion and the second protrusion will be described below.

As described above, the air blower device of the present invention is configured so that the ring-shaped member is supported by the tubular body so as to prevent the ring-shaped member from separating from the tubular body by the contact between the first protrusion formed on the tubular body and the second protrusion formed on the extended part of the ring-shaped member. As a result, the air blower device does not need any individual member such as the holding member of the conventional device described above. Consequently, the number of the composing members for producing an air blower device is decreased, and the air blower device can be produced by simpler producing method (for example, by inserting the ring-shaped member into the tubular body from the opening portion of the front end portion of the tubular body, and then engaging the first protrusion to the second protrusion).

Furthermore, from a viewpoint of keeping functions as an air blower device, the air blower device of the present invention can prevent the size of the air guide passage defined by the tubular body (such as the effective cross-sectional area of the air guide passage, which may have some impact on the flow volume passing through the air guide passage) from decreasing by the extended part of the ring-shaped member as much as possible. In particular, the edge of the extended part of the ring-shaped member is located "between the ring-shaped member and the opening portion at the back end of the tubular body" (that is, the edge does not reach to the opening portion at the back end of the tubular body). As a result, the impact of the extended part to the size of the air guide passage becomes smaller compared to a case where the edge reaches to the opening portion at the back end of the tubular body. Consequently, the flow volume of air that can pass through the air blower device (hereinafter referred to as "passing air volume") can be maintained as much as possible even the extended part is formed on the ring-shaped member. Furthermore, the size of the air guide passage per unit size of air blower device becomes larger compared with a case where the whole body of the ring-shaped member reaches to the opening portion of the tubular body without forming extended parts on the ring-shaped member. Consequently, the passing air volume per unit size of the air blower device can be enhanced compared with this case.

As described above, the air blower device of the present invention can be produced by simpler producing method while keeping functions as an air blower device sufficiently.

Hereinafter, some embodiments of the air blower device of the present invention will be described below.

First, the air blower device, as a first embodiment of the air blower device of the present invention, may be configured so that an edge of the first protrusion facing the extended part of the ring-shaped member (hereinafter referred to as "tip of the first protrusion") does not touch to the extended part of the ring-shaped member.

As described above, the ring-shaped member is supported by the tubular body by the contact (for example, engagement) between the first protrusion and the second protrusion. From a viewpoint of keeping functions as an air blower device, it is preferable that the behavior of the ring-shaped member (for example, the rotation of the ring-shaped member within the tubular body) is not disturbed due to the first protrusion and the second protrusion. In view of that, the air blower device of this embodiment is configured so that the tip of the first protrusion does not touch to the extended part of the ring-shaped member.

By the above configuration, the disturbance of the behavior of the ring-shaped member due to the friction resistance force between those members can be suppressed compared with a case where the tip of the first protrusion contacts with the extended part of the ring-shaped member. Consequently, the functions as an air blower device can be maintained as much as possible even the ring-shaped member is supported by the tubular body by using the first protrusion and the second protrusion.

Next, the air blower device, as a second embodiment of the air blower device of the present invention, may be configured so that an edge of the second protrusion facing the inner periphery of the tubular body (hereinafter referred to as "tip of the second protrusion") does not touch to the inner periphery of the tubular body.

By the above configuration, the disturbance of the behavior of the ring-shaped member can be suppressed compared with a case where the tip of the second protrusion contacts with the inner periphery of the tubular body, by the same reasons described above. Consequently, the functions as an air blower device can be maintained as much as possible.

The air blower device, as a third embodiment of the air blower device of the present invention, may be configured so that the first protrusion has a triangular cross-sectional shape in a cut plane including an axis line of the tubular body.

The above "triangular shape" may be a shape that can be substantially seen as a triangle, but not specifically limited. Examples of the triangular shape may include an actual triangle having three straight sides, a shape having at least one of curved side among the three sides, a shape having at least one of circular vertex (that is, rounded vertex) having a predetermined radius of curvature among three vertex.

By the above configuration, the second protrusion can easily climb over the first protrusion compared with a case where the first protrusion has a quadrangular cross-sectional shape, etc., when the first protrusion engages to the second protrusion by the manner in which the second protrusion approaches to the first protrusion from a direction parallel to the axis line of the tubular body and then the second protrusion climbs over the first protrusion. Consequently, the air blower device can be produced more easily in this case.

Furthermore, the air blower device, as a fourth embodiment of the air blower device of the present invention, may be configured so that a "plurality" of first protrusions is formed on the inner periphery of the tubular body, and at least one of the plurality of first protrusions contacts to the second protrusion.

In other words, all of the plurality of the first protrusions does not necessarily contact to the second protrusion as long as the ring-shaped member is supported by the tubular body by the contact between at least one part of the plurality of the first protrusions and the second protrusion, in this embodiment.

On the other hand, the other part of the plurality of the first protrusions projects into the air guide passage without contacting to the second protrusion when one part of the plurality of the first protrusions contact to the second protrusion. Even in this case, however, this embodiment can prevent the flow of air passing through the air guide passage from being disturbed due to the first protrusion that protrudes into the air guide passage as much as possible compared with a case where the first protrusion has a quadrangular cross-sectional shape, etc., if the first protrusion has the triangular cross-sectional shape as the third embodiment.

The air blower device, as a fifth embodiment of the air blower device of the present invention, may be configured so that a distance between the opening portion at the back end of the tubular body and the first protrusion is smaller than a distance between the opening portion at the front end of the tubular body and the first protrusion (in brief, the first protrusion is formed near the opening portion at the back end of the tubular body).

As described above, one part of the plurality of the first protrusions may be protrude into the air guide passage when the plurality of the first protrusions is formed. Even in this case, however, this embodiment can reduce the disturbance of the flow of air passing through the air guide passage before the air reaches to the opening portion at the "front" end of the tubular body even when the air is disturbed due to the first protrusion, if the first protrusion is formed near the opening portion at the "back" end of the tubular body. Consequently, this embodiment can prevent the flow of air discharged from the tubular body from being disturbed as much as possible compared with a case where the first protrusion is formed near the opening portion at the "front" end of the tubular body. Consequently, the functions as an air blower device can be maintained as much as possible even if the first protrusion is formed on the tubular body.

On the other hand, in general, flow direction regulating plates may be installed at the inside of the ring-shaped member to control the flow volume and the flow direction of discharged air from the air blower device. The flow direction can be controlled by manipulating the ring-shaped member (for example, rotating around the axis line of the tubular body) together with the flow direction regulating plates.

In view of the above, the air blower device, as a sixth embodiment of the air blower device of the present invention, may be configured so that the tubular body is a cylindrical body, and the ring-shaped member is supported by the tubular body so as to be rotatable around the axis line of the tubular body with the same axis of rotation of the tubular body.

These are the descriptions of the several embodiments of the present invention.

As described above, the air blower device of the present invention is configured so that the ring-shaped member is supported by the tubular body by the contact between the first protrusion formed on the tubular body and the second protrusion formed on the extended part of the ring-shaped member. The air blower device of the present invention may be illustrated, in a different viewpoint from the above perspective, especially by focusing on a positional relationship between the first protrusion and the second protrusion, as follows. That is, the air blower device of the present invention comprises:
a tubular body defining an air guide passage, the tubular body allowing air flowed into the tubular body from an opening portion at a back end of the tubular body to pass through the air guide passage and to discharge from an opening portion at a front end of the tubular body; and
a ring-shaped member supported by the tubular body so as to be rotatable around an axis line of the tubular body with the same axis of rotation of the tubular body, at least one part of the ring-shaped member being at the inside of the tubular body.
In the air blower device, the ring-shaped member is supported by the tubular body by a contact between at least one of a plurality of first protrusions formed on an inner periphery of the tubular body at spaces in a circumferential direction of the inner periphery so as to protrude from the inner periphery into the air guide passage defined by the tubular body and at least one of a plurality of second protrusions formed on an outer periphery of the ring-shaped member at spaces in a circumferential direction of the outer periphery so as to protrude from the outer periphery toward the inner periphery of the tubular body, regardless of a "rotational position" representing a position of the ring-shaped member with respect to the tubular body upon the ring-shaped member rotating with respect to the tubular body.

The manner of the contact between the first protrusion and the second protrusion is not specifically limited, in the above configuration. For example, the air blower device may be configured so that one or more of the plurality of first protrusions contact to one of the plurality of second protrusions regardless of the rotational position of the ring-shaped member.

Furthermore, for example, the air blower device may be configured so that the tubular body has two areas on the inner periphery of the tubular body, the two areas is symmetric with respect to the axis line of the tubular body, and
at least one of the first protrusions within one area of the two areas contact to at least one of the second protrusions regardless of the rotational position of the ring-shaped member, and at least one of the first protrusions within the other area of the two areas contact to at least one of the second protrusions regardless of the rotational position of the ring-shaped member.

### BRIEF DESCRIPTION OF DRAWINGS

FIG. 1 is a schematic diagram illustrating one composing member of an air blower device of the present invention.
FIG. 2 is a schematic diagram illustrating other composing member of the air blower device of the present invention.
FIG. 3 is a schematic diagram illustrating still other composing member of the air blower device of the present invention.
FIG. 4 is a schematic diagram illustrating still further other composing member of the air blower device of the present invention.
FIG. 5 is a schematic enlarged view illustrating an inner register supported by a retainer.
FIG. 6 is a schematic cross-sectional view illustrating a configuration of the air blower device of the present invention.
FIG. 7 is a schematic diagram illustrating retainer-side protrusions contacting with inner register-side protrusions.
FIG. 8 is a schematic diagram illustrating retainer-side protrusions contacting with inner register-side protrusions.
FIG. 9 is a schematic diagram illustrating retainer-side protrusions contacting with inner register-side protrusions.

### DESCRIPTION OF EMBODIMENTS

Hereinafter, an embodiment of the air blower device of the present invention will be described by referring to the drawings.

### <Outline of Device>

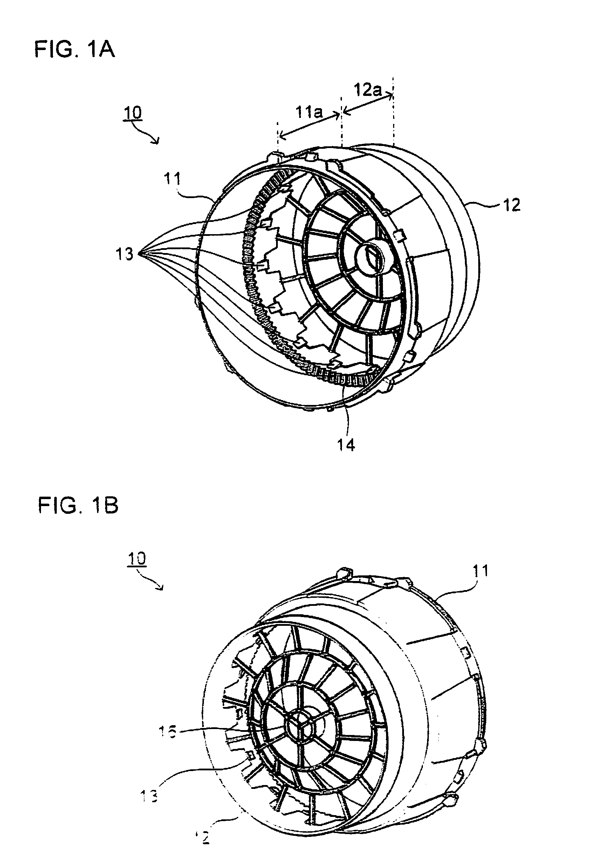

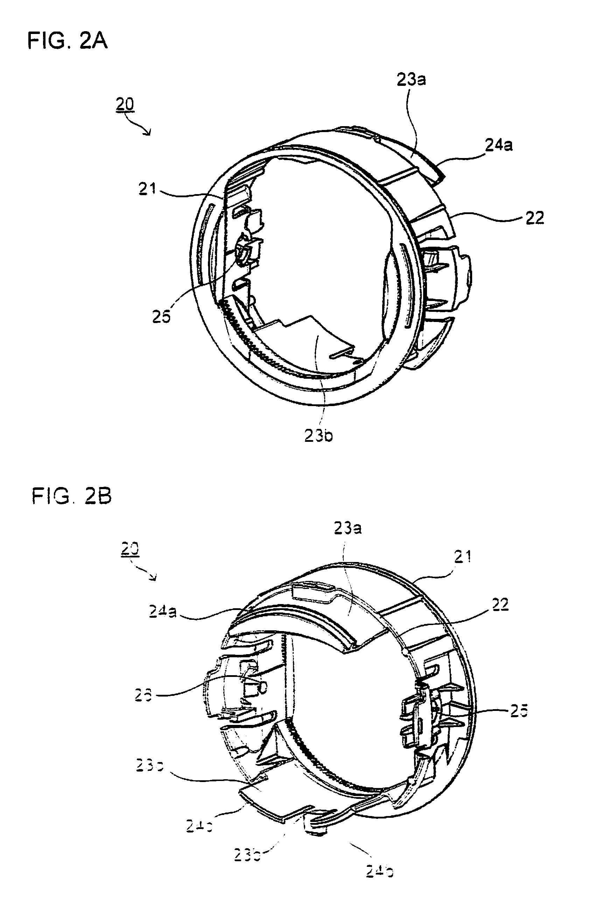

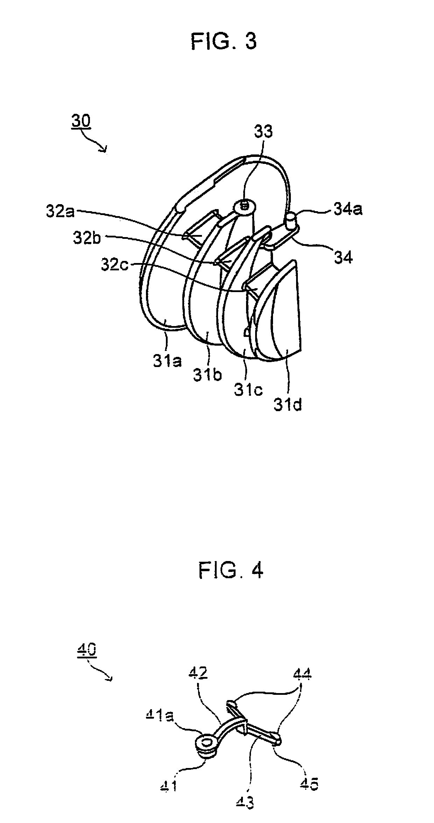

FIG. 1 to FIG. 4 are schematic diagrams illustrating representative members that composes an example of an air blower device according to an embodiment of the present invention (hereinafter referred to as "embodiment device"). The embodiment device has a retainer 10 illustrated in FIG. 1, an inner resister 20 illustrated in FIG. 2, an airflow regulating member 30 illustrated in FIG. 3, and an operational load generating member 40 illustrated in FIG. 4. Hereinafter, configurations of these members are described in detail below.

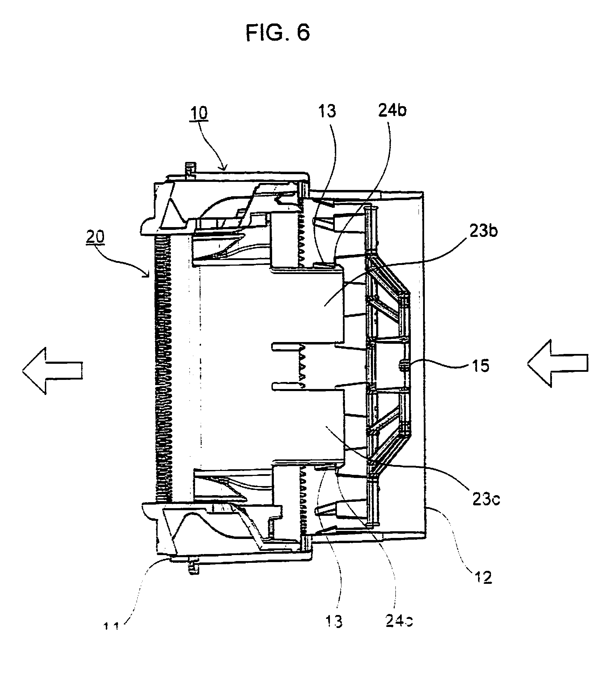

FIG. 1A is a schematic diagram of the retainer 10 when the retainer 10 is viewed from the front, and FIG. 1B is a schematic diagram of the retainer 10 when the retainer 10 is viewed from the back. The retainer 10 is a cylindrical body that has a cylinder-like shape, an opening portion at the front end thereof (hereinafter referred to as "front end portion 11 ") and an opening portion at the back end thereof (hereinafter referred to as "back end portion 12"), as illustrated in FIG. 1A and FIG. 1B. The retainer 10 is configured to define an air guide passage when the members above are assembled to produce the embodiment device, as described below (for example, see FIG. 6). This air guide passage is a flow passage to pass through air flowed in the air guide passage via the back end portion 12 of the retainer 10 and to discharge the air via the front end portion 11.

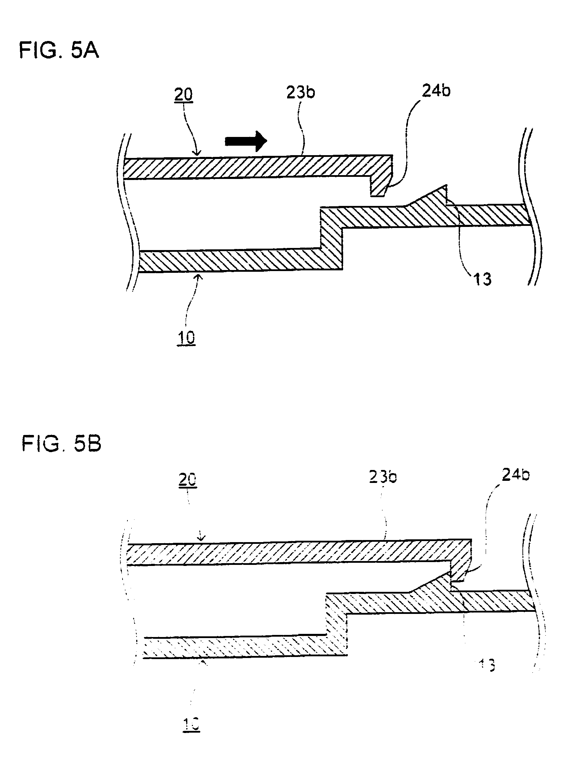

In particular, the retainer 10 has a shape such that two cylindrical bodies are connected. That is, the retainer 10 has a cylindrical body 11a on the front side thereof (a cylindrical body with the front end portion 11) and a cylindrical body 12a on the back side thereof (a cylindrical body with the back end portion 12), as illustrated in FIG. 1A. Here, multiple protrusions 13 (hereinafter referred to as "retainer-side protrusions") are formed on the inner periphery of the back side cylindrical body 12a so that the multiple protrusions 13 are protruded from the inner periphery into the air guide passage defined by the retainer 10. These retainer-side protrusions 13 is formed to have a triangular cross-sectional shape in a cut plane including the axis line of the retainer 10 (see FIG. 5A). Furthermore, the retainer-side protrusions 13 are annularly arranged on the inner periphery of the back side cylindrical body 12a at equal spaces in a circumferential direction. As noted, the retainer-side protrusions 13 are formed on the back side cylindrical body 12a, and hence the distance between the retainer-side protrusions 13 and the back end portion 12 of the retainer 10 is smaller than the distance between the retainer-side protrusions 13 and the front end portion 11 of the retainer 10.

Furthermore, the inner diameter of the front side cylindrical body 11 a of the retainer 10 is larger than the inner diameter of the back side cylindrical body 12a. In addition, an annularly-shaped step 14 is formed on the inner periphery of the retainer 10 near the connecting area of the front side cylindrical body 11 a and the back side cylindrical body 12a. The annularly-shaped step 14 has continuously-arranged repeating multiple protrusions. Each of these multiple protrusions protrude toward the front end portion 11 of the retainer 10. Furthermore, a mesh-like member 15 is formed over the inside of the back side cylindrical body 12a.

FIG. 2A is a schematic diagram of the inner resister 20 when the inner resister 20 is viewed from the front, and FIG. 2B is a schematic diagram of the inner resister 20 when the inner resister 20 is viewed from the back. The inner resister 20 is a ring-shaped member that has a ring-like shape, an opening portion at the front end thereof (hereinafter referred to as "front end portion 21") and an opening portion at the back end thereof (hereinafter referred to as "back end portion 22"), as illustrated in FIG. 2A and FIG. 2B. The inner resister 20 is configured to be supported by the retainer 10 at inside of the retainer 10 when the members above are assembled to produce the embodiment device, as described below (for example, see FIG. 6).

In particular, the inner resister 20 has multiple extended part 23a, 23b, 23c that extend from the back end portion 22 of the inner resister 20 along the axis line of the inner resister 20. The multiple extended part 23a, 23b, 23c are formed so that one end thereof is the fixed end connected to the inner resister 20 and the other end is the free end. The extended parts 23a, 23b, 23c are formed at different spaces in a circumferential direction of the inner resister 20. Furthermore, the extended part 23a of the multiple extended part extend along an inclined direction at a predetermined angle with respect to the direction of axis of the inner resister 20 (an angle toward the inside of the inner resister 20) from the back end portion 22 of the inner resister 20. On the other hand, the extended parts 23b, 23c extends along a direction parallel to the direction of axis of the inner resister 20 from the end portion of the inner resister 20. These extended parts 23a, 23b, 23c are configured to extend toward the back end portion 12 of the retainer 10 when the members above are assembled to produce the embodiment device.

Protrusions 24a, 24b, 24c (hereinafter referred to as "inner resister-side protrusions") are formed on the outer periphery of the extended parts 23a, 23b, 23c so that the protrusions are protruded from each of the extended parts 23a, 23b, 23c toward the outside in a radial direction. These protrusions 24a, 24b, 24c are configured to extend toward the inner periphery of the retainer 10 when the members above are assembled to produce the embodiment device.

Furthermore, a mounting groove 25 is formed at a predetermined position between the front end portion 21 and the back end portion 22 of the inner resister 20. The mounting groove 25 is configured to be installed therein the operational load generating member 40 when the members above are assembled to produce the embodiment device. Additionally, a bearing hole 26 is formed at a position opposite to the mounting groove 25 in a radial direction of the inner resister 20. The bearing hole 26 is configured to be installed therein the airflow regulating member 30 when the members above are assembled to produce the embodiment device.

FIG. 3 is a schematic diagram of the airflow regulating member 30. The airflow regulating member 30 has multiple flow direction regulating plates 31a, 31 b, 31 c, 31d. These flow direction regulating plates 31a, 31 b, 31c, 31d are connected by multiple connecting members 32a, 32b, 32c. The flow direction regulating plate 31 b has a pair of round-shape rotating shafts 33 at the both end of the longer axis of the plate 31b. The airflow regulating member 30 is configured to rotate around an axis line connecting the pair of the rotating shafts 33 when the members above are assembled to produce the embodiment device. Furthermore, the flow direction regulating plate 31c has a plate-shape locking arm member 34 at one end of the longer axis of the plate 31 c. The locking arm member 34 has a convex portion 34a formed to protrude toward the outside in the longer axis of the plate 31 c.

FIG. 4 is a schematic diagram of the operational load generating member 40. The operational load generating member 40 has a supporting part 41 for the rotating shaft, a connecting part 42 and two leg parts 43. The supporting part 41 and the leg part 43 are connected by the curved connecting part 42. The supporting part 41 has a bearing hole 41a. The two leg parts 43 respectively have a first protrusion 44 and a second protrusion 45 at the tip of each leg part. The operational load generating member 40 is configured to be mounted at the mounting groove 25 of the inner resister 20 when the members above are assembled to produce the embodiment device. Additionally, the first protrusion 44 is configured to protrude toward a direction along the direction of the axis line of the inner resister 20, and the second protrusion 45 is configured to protrude toward the outside in a radial direction of the inner resister 20, when being mounted as above. Furthermore, the connecting part 42 is configured to curve to protrude toward the inside in a radial direction of the inner resister 20.

The embodiment device is produced by assembling the members described above. In particular, the operation load generating member 40 is firstly mounted in the mounting groove 25 of the inner resister 20 in such a manner that the longer direction of the connecting part 42 is parallel to the axis line of the inner resister 20. Next, one of the pair of the rotating shafts 33 of the airflow regulating member 30 is inserted into the bearing hole 26 of the inner resister 20, and the other of the pair of the rotating shafts 33 is press-inserted into the bearing hole 41 a prepared at the supporting part 41 of the operation load generating member 40, which is mounted in the mounting groove 25 of the inner resister 20. Thereby, the airflow regulating member 30 is installed in the inner resister 20 so that the airflow regulating member 30 can rotate at the inside of the inner resister 20.

Next, the inner resister 20, in which the airflow regulating member 30 is installed, is inserted into the retainer 10 from the front end portion 11 of the retainer 10. After that, the inner resister 20 is supported at the inside of the retainer 10 by the engagement of the retainer-side protrusions 13 prepared at the retainer 10 and the inner resister-side protrusions 24a, 24b, 24c prepared at the extended parts 23a, 23b, 23c of the inner resister 20. By the above configuration, the inner resister 20 can rotate around the axis line of the retainer 10 with the same axis of rotation of the retainer 10.

Hereinafter, the manner of supporting the inner resister 20 by the retainer 10 will be described by referring to FIG. 5 to FIG. 9 in more detail.

FIG. 5 is a schematic enlarged view illustrating the way of the engagement of the retainer-side protrusions 13 and the inner resister-side protrusion (24b in this figure) as described above. As illustrated in FIG. 5A, the inner resister-side protrusion 24b prepared at the extended part 23b of the inner resister 20 approaches to the retainer-side protrusions 13 prepared at the retainer 10 when the inner resister 20 is inserted from the front end portion 11 of the retainer 10. After that, as illustrated in FIG. 5B, the inner resister-side protrusions 24b climbs over and engages to the retainer-side protrusions 13 when the inner resister-side protrusions 24b reaches to the retainer-side protrusions 13. Thereby, the inner resister 20 is supported at the inside of the retainer 10 so as to prevent the inner resister 20 from separating from the retainer 10 by the engagement of the inner resister-side protrusions (24b in this figure) and the retainer-side protrusions 13.

As illustrated in FIG. 5B, an edge of the retainer-side protrusions 13 faces to the extended part 23b but does not touch to the extended part 23, when the inner resister 20 is supported in the retainer 10. Similarly, an edge of the inner resister-side protrusion 24b faces to the inner periphery of the retainer 10 but does not touch to the inner periphery of the retainer 10.

FIG. 6 is a schematic cross-sectional view of the air blower device to illustrate the way that the inner resister 20 is supported at the inside of the retainer 10. Note that the airflow regulating member 30, which is installed at the inside of the inner resister 20, is not illustrated in FIG. 6 to facilitate understanding of the figure. In addition, as arrowed lines illustrated in the figure, the embodiment device is configured to let air flowed in the retainer 10 from the back end portion 12 of the retainer 10, passed through the air guide passage defined by the retainer 10, and discharged from the front end portion 11 of the retainer 10.

As illustrated in FIG. 6, edges of the extended parts 23b, 23c face the back end portion 12 of the retainer 10 and is located between the inner resister 20 and the back end portion 12 of the retainer 10. In addition, an edge of the extended part 23a, which is not illustrated in the figure, also faces to the back end portion 12 and locates between the inner resister 20 and the back end portion 12 of the retainer 10.

Furthermore, as illustrated in FIG. 6, the inner resister-side protrusions 24b, 24c prepared at the extended parts 23b, 23c of the inner resister 20 and part of the multiple retainer-side protrusions 13 prepared on the retainer 10 contact (engage) each other. In addition, the inner resister-side protrusion 24a prepared at the extended part 23a of the inner resister 20, which is not illustrated in the figure, and part of the multiple retainer-side protrusions 13 also contact (engage) each other. That is, "one part" of the multiple retainer-side protrusions 13 contact to the inner resister-side protrusions (24a, 24b, 24c) of the inner resister 20, and "the other part" of the multiple retainer-side protrusions 13 protrude toward the air guide passage.

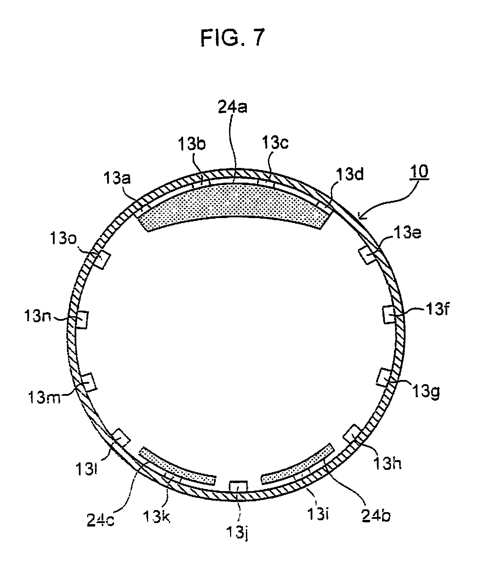

In more particular to the way of the contact between the retainer-side protrusions 13a to 13o and the inner resister-side protrusions 24a, 24b, 24c, FIG. 7 is a schematic diagram illustrating the way of the contact of the retainer-side protrusions 13 and the inner resister-side protrusions 24a, 24b, 24c when the embodiment device is viewed from the side of the back end portion 12 of the retainer 10. The position of the inner resister 20 with respect to the retainer 10 when the inner resister 20 rotates with respect to the retainer 10 is hereinafter referred to as "rotational position" for the sake of convenience.

As illustrated in FIG. 7, the inner resister-side protrusions 24a contacts with four retainer-side protrusions 13a, 13b, 13c, 13d when the inner resister 20 is in a rotational position illustrated in the figure. Furthermore, the inner resister-side protrusion 24b contacts with one retainer-side protrusion 13i, and the inner resister-side protrusion 24c contacts with one retainer-side protrusion 13k.

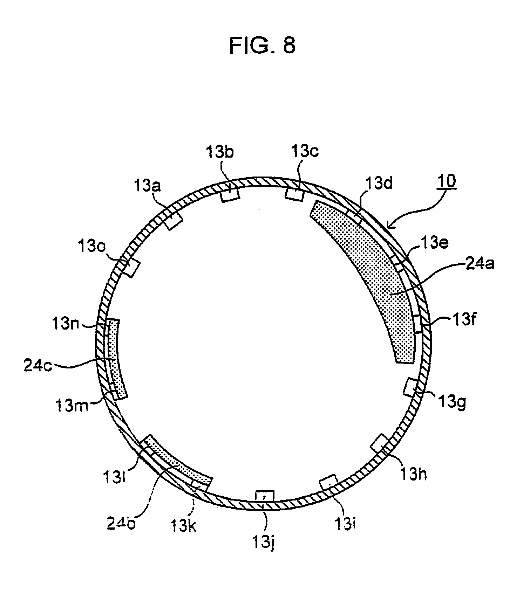

In addition, parts relating to the inner resister-side protrusions 24a, 24b, 24c (that is, the inner resister-side protrusions 24a, 24b, 24c and the extended parts 23a, 23b, 23c) are colored in FIG. 7 (and FIG. 8 to FIG. 9 described below) to facilitate understanding of the figure. This coloring is intended to make the parts relating to the inner resister-side protrusions 24a, 24b, 24c be easily visible but not to show the cross-section of the parts, etc.

On the other hand, FIG. 8 is a schematic diagram illustrating the way of the contact of the retainer-side protrusions 13 and the inner resister-side protrusions 24a, 24b, 24c in the case that the rotational position of the inner resister 20 is at a different position, when the embodiment device is viewed from the side of the back end portion 12 of the retainer 10. As illustrated in FIG. 8, the inner resister-side protrusions 24a contacts with three retainer-side protrusions 13d, 13e, 13f when the inner resister 20 is in this rotational position. Furthermore, the inner resister-side protrusion 24b contacts with two retainer-side protrusions 13k, 13l, and the inner resister-side protrusion 24c contacts with two retainer-side protrusions 13m, 13n.

As described above, the embodiment device is configured so that at least one of the multiple retainer-side protrusions 13a to 13o contact with at least one of the multiple inner resister-side protrusions 24a, 24b, 24c, regardless of the rotational position of the inner resister 20. In more particular, one or more of the multiple retainer-side protrusions 13a to 13o contact with one of the multiple inner resister-side protrusions 24a, 24b, 24c.

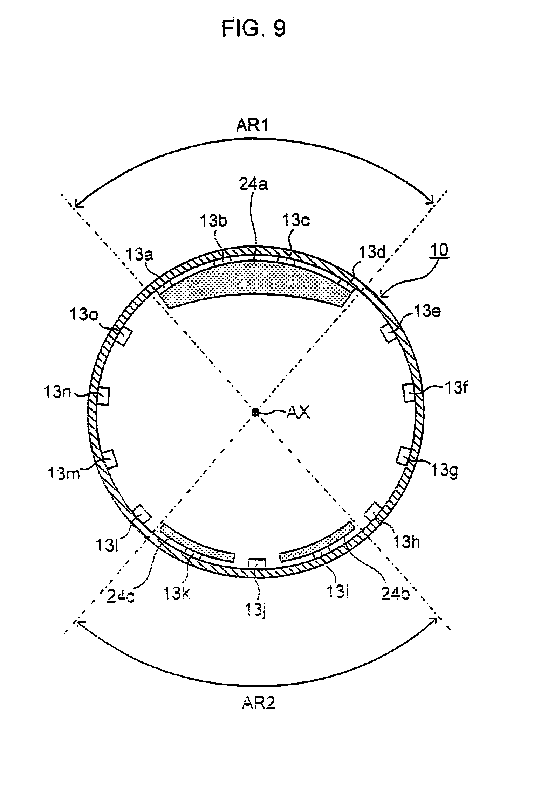

Next, the manner of the contact between the retainer-side protrusions 13a to 13o and the inner resister-side protrusions 24a, 24b, 24c will be described by referring to FIG. 9 in more detail.

As illustrated in FIG. 9, two imaginary areas AR1, AR2 are virtually prepared on the inner periphery of the retainer 10 for illustrative purpose. These areas AR1, AR2 are symmetric with respect to the axis line AX of the retainer 10. The embodiment device is configured so that at least one of the retainer-side protrusions at the inside of the one area AR1 (13a to 13d) contact with at least one of the inner resister-side protrusions (24a). Furthermore, at least one of the retainer-side protrusions at the inside of the other area AR2 (13i, 13k) contact with at least one of the inner resister-side protrusions (24b, 24c). In addition, the way of the contact between the retainer-side protrusions 13a to 13o and the inner resister-side protrusions 24a, 24b, 24c is maintained regardless of the rotational position of the inner resister 20, as will be understood by the above descriptions.

These are the manner of supporting the inner resister 20 by the retainer 10. The inner resister 20 is supported by the retainer 10 so that at least one part of the inner resister 20 is at the inside of the retainer 10 by the contact (engagement) between the retainer-side protrusions 13 and the inner resister-side protrusions (24a, 24b, 24c) as described above.

The embodiment device is produced by assembling the composing members as described above.

The embodiment device is configured so that the operation load generating member 40 generates operation loads and clicking feelings when controlling the flow volume and the flow direction of the discharged air from the embodiment device. In particular, the operation load is generated due to a resistive force (frictional force) between the bearing hole 41 a of the operation load generating member 40 and the rotating shafts 33 of the airflow regulating member 30 when the airflow regulating member 30 is rotated around the axis perpendicular to the axis line of the embodiment device. Furthermore, the operation load and the clicking feeling are generated due to a resistive force between the first protrusion 44 of the operation load generating member 40 and the annularly-shaped step 14 (a resistive force when the first protrusion 44 climbs over the multiple protrusions formed on the annularly-shaped step 14) when the airflow regulating member 30 is rotated around the axis line of the embodiment device.

Furthermore, the convex portion 34a prepared on the airflow regulating member 30 is engaged with a locking member formed on the inner periphery of the inner resister 20, etc. (not illustrated in the figures), when the airflow regulating member 30 completely closes the front end portion 21 of the inner resister 20 (that is, a fully-closed state where no air is discharged from the embodiment device). Thereby, the clicking feeling is generated when the airflow regulating member 30 is about to be in the fully-closed state.

Furthermore, the second protrusion 45 of the operation load generating member 40 contacts with the inner periphery of the retainer 10 when the airflow regulating member 30 is rotated around the axis line of the embodiment device, and thereby noises due to hit between the inner resister 20 and the retainer 10 become suppressed.

As described above, one embodiment of the present invention (the embodiment device) comprises:
a tubular body 10 defining an air guide passage, the tubular body 10 allowing air flowed into the tubular body 10 from an opening portion 12 at a back end of the tubular body 10 to pass through the air guide passage and to discharge from an opening portion 11 at a front end of the tubular body 10; and
a ring-shaped member 20 supported by the tubular body 10, at least one part of the ring-shaped member 10 being at the inside of the tubular body 10.

In the embodiment device,
the ring-shaped member 20 has an extended part 23a to 23c extending from the ring-shaped member 20 toward the opening portion 12 at the back end of the tubular body 10,
the extended part 23a to 23c has an edge facing the opening portion 12 at the back end of the tubular body 10, the edge is located between an edge 22 belonging to the ring-shaped member 20 to face the opening portion 12 at the back end of the tubular body 10 and the opening portion 12 at the back end of the tubular body 10.

Furthermore, in the embodiment device,
the ring-shaped member 20 is supported by the tubular body 10 by a contact between a first protrusion 13 formed on an inner periphery of the tubular body 10 so as to protrude from the inner periphery into the air guide passage defined by the tubular body 10 and a second protrusion 24a to 24c formed on the extended part 23a to 23c of the ring-shaped member 20 so as to protrude from the extended part 23a to 23c toward the inner periphery of the tubular body 10.

The composing members of the above embodiment device have features described below.

First, the edge of the first protrusion 13 facing the extended part 23a to 23c of the ring-shaped member 20 does not touch to the extended part 23a to 23c of the ring-shaped member 20. Furthermore, the edge of the second protrusion 24a to 24c facing the inner periphery of the tubular body 10 do not touch to the inner periphery of the tubular body 10.

Next, the first protrusion 13 has a triangular cross-sectional shape in a cut plane including an axis line of the tubular body 10 (see FIG. 5).

Furthermore, the plurality of first protrusions 31 is formed on the inner periphery of the tubular body 10, and at least one of the plurality of first protrusions 13 contact to the second protrusion 24a to 24c.

Additionally, the distance between the opening portion 12 at the back end of the tubular body 10 and the first protrusion 13 is smaller than a distance between the opening portion 11 at the front end of the tubular body 10 and the first protrusion 13.

Furthermore, the tubular body 10 is a cylindrical body 10, and the ring-shaped member 20 is supported by the tubular body 10 so as to be rotatable around the axis line of the tubular body 10 with the same axis of rotation of the tubular body 10.

Focusing on the relationship between the first protrusion 13 and the second protrusion 24a to 24c, the embodiment device is configured to comprise:
a tubular body 10 defining an air guide passage, the tubular body 10 allowing air flowed into the tubular body 10 from an opening portion 12 at a back end of the tubular body 10 to pass through the air guide passage and to discharge from an opening portion 11 at a front end of the tubular body 10; and
a ring-shaped member 20 supported by the tubular body 10 so as to be rotatable around an axis line of the tubular body 10 with the same axis of rotation of the tubular body 10, at least one part of the ring-shaped member 20 being at the inside of the tubular body 10.

In the embodiment device, the ring-shaped member 20 is supported by the tubular body 10 by a contact between at least one of a plurality of first protrusions 13 formed on an inner periphery of the tubular body 10 at spaces in a circumferential direction of the inner periphery so as to protrude from the inner periphery into the air guide passage defined by the tubular body 10 and at least one of a plurality of second protrusions 24a to 24c formed on an outer periphery of the ring-shaped member 20 at spaces in a circumferential direction of the outer periphery so as to protrude from the outer periphery toward the inner periphery of the tubular body 10, regardless of a rotational position representing a position of the ring-shaped member 10 with respect to the tubular body 10 upon the ring-shaped member 20 is rotating with respect to the tubular body 10.

Furthermore, one or more of the plurality of first protrusions 13 contact to one of the plurality of second protrusions 24a to 24c regardless of the rotational position of the ring-shaped member 20.

Additionally, the tubular body 10 has two areas on the inner periphery of the tubular body 10, the two areas being symmetric with respect to the axis line AX of the tubular body 10.

In the embodiment device, at least one of the first protrusions 13 within one area of the two areas contact to at least one of the second protrusions 24a to 24c regardless of the rotational position of the ring-shaped member 20, and at least one of the first protrusions 13 within the other area of the two areas contact to at least one of the second protrusions 24a to 24c regardless of the rotational position of the ring-shaped member 20.

The present invention is not limited within the above specific embodiments, various modifications corrections may be made without departing from the scope of the invention.

For example, the retainer-side protrusions 13 may be formed between the connecting positions where the mesh-like member 15 of the retainer 10 is connected to the inner periphery of the retainer 10 (see FIG. 1 B). Thereby, the retainer-side protrusions 13 can be easily formed on the inner periphery of the retainer 10 in the case that the retainer 10 is produced by a method such as the injection molding.

Furthermore, the multiple retainer-side protrusions 13 are annularly arranged on the inner periphery of the retainer 10 at equal spaces in a circumferential direction, in the embodiment device. However, the retainer-side protrusions 13 may be arranged on the inner periphery at different spaces in a circumferential direction.

Furthermore, the multiple inner resister-side protrusions 24a, 24b, 24c are prepared on the extended parts 23a, 23b, 23c that are formed at different spaces in a circumferential direction of the inner resister 20. That is, the multiple inner resister-side protrusions 24a, 24b, 24c are arranged at different spaces in the circumferential direction. However, the inner resister-side protrusions 24a, 24b, 24c may be arranged at equal spaces in the circumferential direction. That is, the extended parts 23a, 23b, 23c may be formed so that the inner resister-side protrusions 24a, 24b, 24c are arranged at equal spaces in the circumferential direction.

## Claims

1. An air blower device comprising:
a tubular body defining an air guide passage, the tubular body allowing air flowed into the tubular body from an opening portion at a back end of the tubular body to pass through the air guide passage and to discharge from an opening portion at a front end of the tubular body; and
a ring-shaped member supported by the tubular body, at least one part of the ring-shaped member being at the inside of the tubular body,
the ring-shaped member having an extended part extending from the ring-shaped member toward the opening portion at the back end of the tubular body,
the extended part having an edge facing the opening portion at the back end of the tubular body, the edge being located between an edge belonging to the ring-shaped member to face the opening portion at the back end of the tubular body and the opening portion at the back end of the tubular body,
the ring-shaped member being supported by the tubular body by a contact between a first protrusion formed on an inner periphery of the tubular body so as to protrude from the inner periphery into the air guide passage defined by the tubular body and a second protrusion formed on the extended part of the ring-shaped member so as to protrude from the extended part toward the inner periphery of the tubular body.

2. The air blower device according to claim 1,
wherein, an edge of the first protrusion facing the extended part of the ring-shaped member not touching to the extended part of the ring-shaped member.

3. The air blower device according to claim 1 or claim 2,
wherein, an edge of the second protrusion facing the inner periphery of the tubular body not touching to the inner periphery of the tubular body.

4. The air blower device according to any one of claim 1 to claim 3,
wherein, the first protrusion having a triangular cross-sectional shape in a cut plane including an axis line of the tubular body.

5. The air blower device according to any one of claim 1 to claim 4,
wherein, a plurality of first protrusions being formed on the inner periphery of the tubular body, and at least one of the plurality of first protrusions contacting to the second protrusion.

6. The air blower device according to any one of claim 1 to claim 5,
wherein, a distance between the opening portion at the back end of the tubular body and the first protrusion being smaller than a distance between the opening portion at the front end of the tubular body and the first protrusion.

7. The air blower device according to any one of claim 1 to claim 6,
wherein, the tubular body being a cylindrical body, and the ring-shaped member being supported by the tubular body so as to be rotatable around the axis line of the tubular body with the same axis of rotation of the tubular body.

8. An air blower device comprising:
a tubular body defining an air guide passage, the tubular body allowing air flowed into the tubular body from an opening portion at a back end of the tubular body to pass through the air guide passage and to discharge from an opening portion at a front end of the tubular body; and
a ring-shaped member supported by the tubular body so as to be rotatable around an axis line of the tubular body with the same axis of rotation of the tubular body, at least one part of the ring-shaped member being at the inside of the tubular body,
the ring-shaped member being supported by the tubular body by a contact between at least one of a plurality of first protrusions formed on an inner periphery of the tubular body at spaces in a circumferential direction of the inner periphery so as to protrude from the inner periphery into the air guide passage defined by the tubular body and at least one of a plurality of second protrusions formed on an outer periphery of the ring-shaped member at spaces in a circumferential direction of the outer periphery so as to protrude from the outer periphery toward the inner periphery of the tubular body, regardless of a rotational position representing a position of the ring-shaped member with respect to the tubular body upon the ring-shaped member rotating with respect to the tubular body.

9. The air blower device according to claim 8,
wherein, one or more of the plurality of first protrusions contacting to one of the plurality of second protrusions regardless of the rotational position of the ring-shaped member.

10. The air blower device according to claim 8 or claim 9,
wherein the tubular body having two areas on the inner periphery of the tubular body, the two areas being symmetric with respect to the axis line of the tubular body,
at least one of the first protrusions within one area of the two areas contacting to at least one of the second protrusions regardless of the rotational position of the ring-shaped member, and at least one of the first protrusions within the other area of the two areas contacting to at least one of the second protrusions regardless of the rotational position of the ring-shaped member.
